# EUROPEAN PATENT APPLICATION

(11) **EP 3 048 501 A1**
(43) Date of publication of application: **27.07.2016**
(21) Application number: 15275020.4
(22) Date of filing: 20.01.2015
(51) Int. Cl.: G05B 23/02

(54) **Determination of vehicle capabilities**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed in a method and apparatus for determining a capability of a vehicle (102a), for example, an aircraft. The method comprises: acquiring, by one or more processors (112), from the vehicle (102a), fault data that indicates the presence or absence of a fault on the vehicle (102a); acquiring, by the one or more processors (112), a mission model specifying a mission (200) to be performed; and processing, by the one or more processors (112), the fault data to determine an indication indicative of a capability of the vehicle (102a) to perform the mission (200) specified by the mission model. The fault data may include one or more Fault Indication Codes (FICs) that are activated in response to the presence of respective faults in the vehicle (102a). The one or more processors (112) may, using the determined indications, determine a mission or maintenance schedule for the vehicle (1 02a).

## Description

### FIELD OF THE INVENTION

The present invention relates to the determination of capabilities of vehicles, in particular with respect to missions that are to be executed by those vehicles.

### BACKGROUND

Many aircraft generate fault data that may be downloaded from the aircraft. Typically, this fault data is used in the diagnosis of faults that have occurred on the aircraft, or the prognosis of faults that are likely to occur.

Separate to the field of aircraft fault diagnosis, conventional aircraft scheduling systems typically provide fleet managers or controllers responsible for managing the execution of aircraft sorties or missions while attempting to minimize costly delays and cancellations and while complying with complex maintenance constraints. As the number of aircraft in a fleet increases, as more complex or unpredictable missions are introduced, or as more complicated maintenance constraints are introduced, it becomes more challenging and difficult for a fleet manager to effectively schedule the performance of missions by the aircraft.

Also separate to the field of aircraft fault diagnosis, conventional aircraft maintenance scheduling systems typically provide a maintenance manager responsible for scheduling maintenance of a fleet of aircraft based on trend results and the like. As the number of aircraft in a fleet increases or as the "uptime" for each aircraft is demanded to be higher, it becomes more challenging and difficult for a maintenance manager to effectively schedule maintenance for the aircraft.

Conventional aircraft maintenance tends to be based on a fixed schedule and includes performing maintenance activities based on fixed intervals. These fixed schedules can lead to conducting maintenance prior to or after when maintenance should be conducted. For example, in some instances a fixed maintenance schedule may cause a part that is operating very well to be removed and replaced early.

### SUMMARY OF THE INVENTION

The present inventors have realised that aircraft fault data may be used to inform users about what tasks an aircraft is capable of achieving, instead of or in addition to what tasks an aircraft is incapable of achieving. Conventionally, fault data acquired from an aircraft tends only to be used to diagnose or prognose aircraft faults so that those faults can be fixed.

The present inventors have realised that, for certain missions, it tends not to be necessary for an aircraft to be maintained to the highest level in order for that aircraft to be capable of accomplishing that mission. The present inventors have further realised that, in many cases, certain aircraft faults have little or no bearing on a mission undertaken by that aircraft. Conventionally, all aircraft in a fleet tend to be maintained at the highest standard possible.

In a first aspect the present invention provides a system for extracting aircraft information from at least one aircraft and filtering the aircraft information so as to provide an output display to an aircraft mission controller illustrating the availability of the aircraft to execute different missions. The present invention may extend to extracting aircraft information from a fleet of aircraft and displaying to the controller which aircraft of the fleet can execute which roles. Actual or potential faults that are likely to prevent execution of a particular mission may be determined more quickly than by using conventional systems, thereby assisting the controller in decision making for missions. The invention tends to increase the rate of successfully completed missions, measured as an increase of the availability of aircraft.

In a further aspect, the present invention provides a method of determining a capability of a vehicle. The method comprises: acquiring, by one or more processors, from the vehicle, fault data that indicates the presence or absence of a fault on the vehicle; acquiring, by the one or more processors, a mission model specifying a mission to be performed; and processing, by the one or more processors, the fault data to determine an indication indicative of a capability of the vehicle to perform the mission specified by the mission model.

The method may further comprise: acquiring, by the one or more processors, from each of one or more further vehicles, fault data that indicates the presence or absence of a fault on that further vehicle. The method may further comprise acquiring, by the one or more processors, one or more further mission models, each further mission model specifying a further mission to be performed, each further mission being different to the mission specified by the mission model. The method may further comprise, for the vehicle and each of the further vehicles, processing, by the one or more processors, the fault data acquired from that vehicle or further vehicle to determine an indication indicative of a capability of that vehicle or further vehicle to perform the mission specified by the mission model. The method may further comprise, for the vehicle, and for the mission model and each of the further mission models, processing, by the one or more processors, the fault data acquired from the vehicle to determine an indication indicative of a capability of the vehicle to perform the mission or further mission specified by the mission model or further mission model. The method may further comprise, for the vehicle and each of the further vehicles, and for the mission model and each of the further mission models, processing, by the one or more processors, the fault data acquired from that vehicle or further vehicle to determine an indication indicative of a capability of that vehicle or further vehicle to perform the mission or further mission specified by that mission model or further mission model.

The mission model may specify one or more mission segments that are required to be completed in order to accomplish the mission. The mission model may specify, for each mission segment, one or more tasks or procedures that are required to be performed by the vehicle in order to accomplish that mission segment. The mission model may specify, for each of the specified tasks or procedures, at least one component or system of components, the at least one component or system of components being on-board the vehicle, and the at least one component or system of components being implemented during the vehicle performing that specified task or procedure.

The fault data acquired from the vehicle may comprise one or more Fault Indication Codes that are activated in response to the presence of respective faults in the vehicle. Each Fault Indication Code may be associated with a respective component or system of components. Each Fault Indication Code may indicate a fault with the component or system of components with which it is associated.

Each indication may be a score indicative of a relative capability of a vehicle to perform a mission.

The method may further comprise, for the vehicle and each of the further vehicles, using the fault data acquired from that vehicle or further vehicle, assigning, to each fault present on that vehicle or further vehicle, a weight based on a severity of that fault. For the vehicle and each of the further vehicles, the score determined for that vehicle or further vehicle may be a function of the weights assigned to the faults present on that vehicle or further vehicle.

The method may further comprise, assigning, to each of the components or systems of components specified in the mission model, a weight. For the vehicle and each of the further vehicles, the score indicative of a relative capability of that vehicle or further vehicle to perform the mission specified by the mission model may be a function of the weights assigned to each of the components or systems of components.

The method may further comprise determining, by the one or more processors, using the determined indications, an optimised mission schedule for the vehicle and further vehicles to perform the mission and/or further missions.

The method may further comprise determining, by the one or more processors, using the determined indications, an optimised maintenance schedule for performing maintenance on the vehicle and/or the further vehicles.

Each vehicle may be an aircraft.

The method may further comprise performing an action based on the indicated. Such actions may include, but are not limited to: performing a maintenance operation on the vehicle; performing, by or using the vehicle, a mission (e.g. the mission specified by the mission model); determining a mission schedule which may include determining a mission schedule for the vehicle; implementing, by or using the vehicle, a determined mission schedule; determining a maintenance schedule which may include determining a maintenance schedule for the vehicle; implementing, by or using the vehicle, a determined maintenance schedule.

In a further aspect, the present invention provides apparatus for determining a capability of a vehicle. The apparatus comprises one or more processors configured to: acquire, from the vehicle, fault data that indicates the presence or absence of a fault on the vehicle; acquire a mission model specifying a mission to be performed; and process the fault data to determine an indication indicative of a capability of the vehicle to perform the mission specified by the mission model.

In a further aspect, the present invention provides one or more aircraft comprising apparatus according to the preceding aspect.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing the program or the plurality of programs according to the preceding aspect.

### BRIEF DESCRIPTION OF THE DRAWINGS

Figure 1 is a schematic illustration (not to scale) of an example of an example operational environment;
Figure 2 is a schematic illustration (not to scale) showing an example of phased missions;
Figure 3 is a process flow-chart showing certain steps of an embodiment of aircraft management method; and
Figure 4 is a schematic illustration (not to scale) showing an example display.

### DETAILED DESCRIPTION

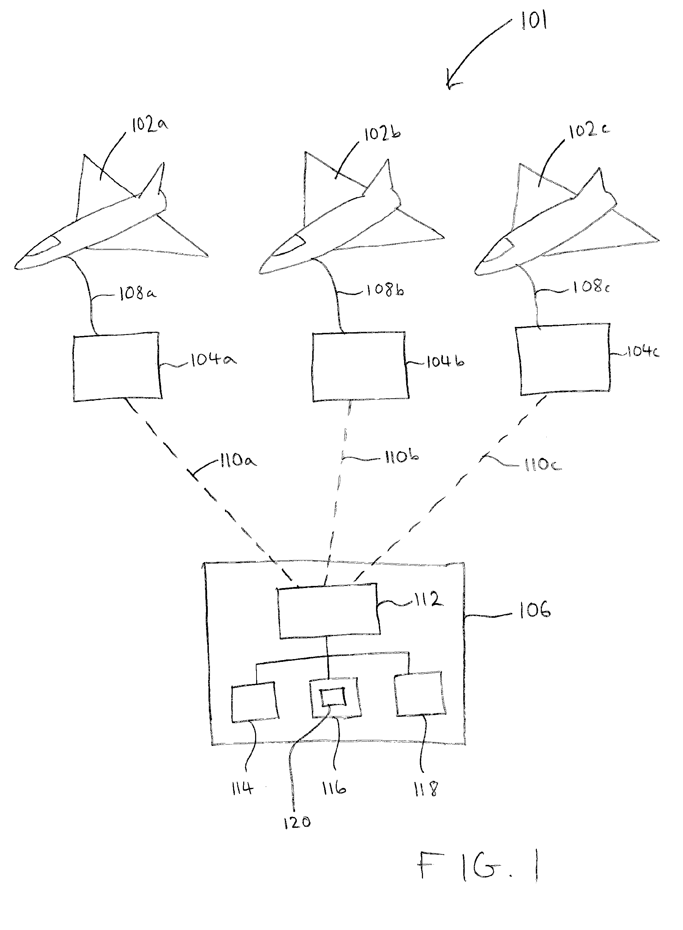

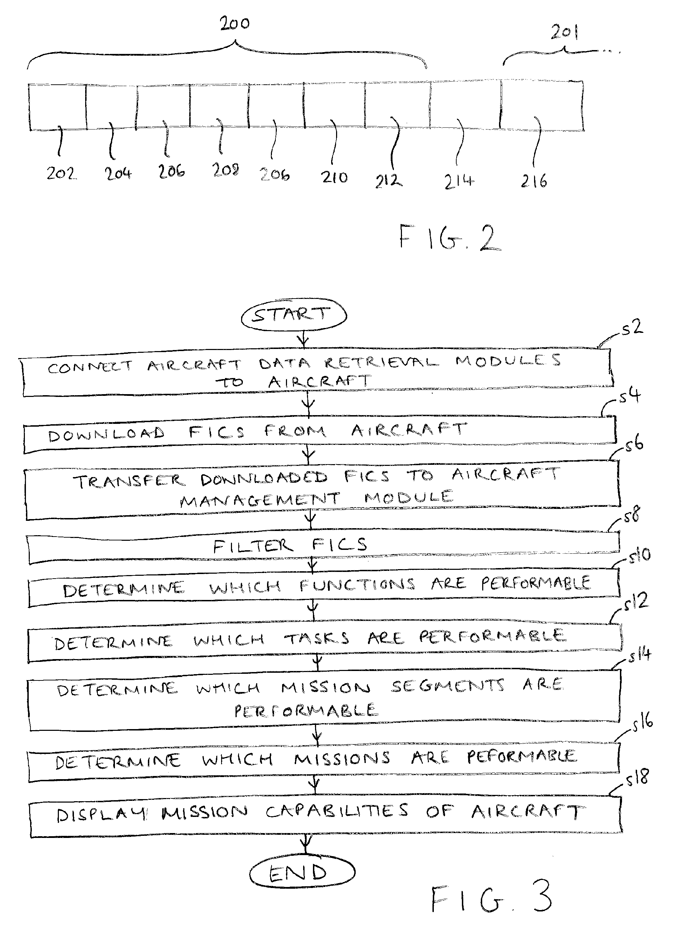

Figure 1 is a schematic illustration (not to scale) of an example operational environment 101 in which an embodiment of an aircraft management method is implemented. The aircraft management method is described in more detail later below with reference to Figure 3.

In this embodiment, the environment 101 comprises a plurality of aircraft 102a-c, a plurality of aircraft data retrieval modules 104a-c, and an aircraft management module 106.

The aircraft 102a-c are conventional aircraft. The aircraft 102a-c form a fleet of aircraft. The aircraft 102a-c may be the same type of aircraft as each other. Alternatively, one or more of the aircraft 102a-c may be a different type of aircraft to another aircraft in the fleet. Each of the aircraft 102a-c may a manned or an unmanned aircraft.

In this embodiment, each aircraft 102a-c comprises a plurality of different subsystems. Examples of subsystems that may be included in one or more of the aircraft 102a-c include, but are not limited to, a propulsion system, mechanical systems, a power system, a fuel system, a flight management system, an environmental control system, a hydraulics system, and a sensor system, for example, a radar system. Each of the subsystems of each aircraft 102a-c may include various sensors and one or more computers or other processing apparatus or processors from which data relating to a state or operations of that subsystem may be downloaded.

In this embodiment, each of the aircraft 102a-c is configured to output fault data indicating faults or errors that have occurred during or prior to a recent sortie by that aircraft 102a-c. Fault data may also be known as maintenance messages. In this embodiment, fault data is an electronic message that an on-aircraft piece of equipment transmits to a user's display/memory area to help identify and isolate a fault. In this embodiment, fault data that is output by an aircraft 102a-c includes one or more fault indicators, which in this embodiment are Fault Identification Codes (FICs). Fault data may include, but is not limited to, an address, a time of occurrence, and a FIC.

A fault indicator is activated in response to the presence of the fault in that aircraft 102a-c. In this embodiment, each FIC is associated with one or more Line Replaceable Items (LRIs) on-board an aircraft 102a-c. In this embodiment, each FIC identifies a type of fault which has occurred within a piece of equipment or LRI. Using a FIC value, it may be determined whether or not the associated fault is of a critical nature, what functions may be affected. In some embodiments, a FIC may provide an indication of how an associated fault may be repaired.

An LRI is equipment which can be removed from the aircraft without significant maintenance and replaced on the line. Examples of LRIs include, but are not limited to systems, apparatus, devices, or items of hardware on-board an aircraft. An LRI may be any aircraft component of system comprising multiple aircraft components. An FIC being output by an aircraft 102a-c indicates that a fault or error has occurred with the LRI(s) associated with that FIC on-board that aircraft 102a-c. The terminology "fault" or "error" is used herein to refer to a loss of an ability of an LRI to perform some intended function.

Each aircraft 102a-c is connected to a respective aircraft data retrieval module 104a-c via a respective wired communication link 108a-c. The aircraft 102a-c may each comprise a respective output (e.g. a USB port) to which a wired communication link 108a-c may be connected. As described in more detail later below with reference to Figure 3, each aircraft 102a-c is configured to output its fault data (including a set of FICs) to the aircraft data retrieval module 104a-c to which it is connected.

The aircraft data retrieval modules 104a-c are portable computing devices, such as tablet computers, that are configured to retrieve aircraft fault data from the aircraft 102a-c. Preferably, the aircraft data retrieval modules 104a-c are ruggedized devices that are relatively resistant to the effects of moisture, corrosion, vibration, electromagnetic interference, and extreme heat and coldness.

In this embodiment, the aircraft data retrieval modules 104a-c are configured to relay the downloaded aircraft fault data, via respective communication links 110a-c, to the aircraft management module 106.

In this embodiment, the aircraft management module 106 comprises a processor 112, a user input device 114, a memory 116, and a display 118.

In some embodiments, the aircraft management module 106 is a portable computing device, for example a tablet computer. In other embodiments, the aircraft management module 106 is a central computing device that may be a desktop computer.

The user input device 114 may, for example, comprise a keyboard, a mouse, a touch screen display, or voice recognition device. The user input device 114 enables a user of the aircraft management module 106 to input information into the aircraft management module 106.

The processor 112 is configured to receive the aircraft fault data received from the aircraft data retrieval modules 104a-c via the communication links 110a-c. The processor 112 is connected to the user input device 114 such that information/data received at the user input device 114 is received by the processor 112. The processor 112 is configured to process received information, as described in more detail later below with reference to Figure 3.

The processor 112 is further connected to the memory 116 such that information stored on the memory 116 may be acquired by the processor 112 from the memory 116 and processed by the processor 112.

The memory 116 is configured to store aircraft data, for example, aircraft configuration data, parts reference information, test data, and aircraft calculations.

In this embodiment, the memory 116 stores a plurality of "mission models" which are collectively indicated in Figure 1 by a single box and the reference numeral 120. A mission model is described in more detail later below.

The memory 116 may also store technical data relating to one or more subsystems of one or more of the aircraft 102a-c. For example, the memory 116 may store one or more integrated electronic technical manuals (IETMs) relating to an aircraft subsystem.

The processor 112 is further connected to the display 118 such that an output of the processor 112 may be displayed on the display 118, e.g. to a user of the aircraft management module 106. The display 118 may be a touch screen display.

Apparatus, including the processor 112, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

The following information is useful in the understanding of the aircraft management method, which is described in more detail later below with reference to Figure 3.

The terminology "mission" is used herein to refer to an operation or sortie that is to be undertaken by an aircraft 102a-c. A mission may include a series of successive segments or phases. In addition to within-mission segments and tasks, at the start and/or end of each mission, a maintenance opportunity may exist.

Figure 2 shows schematically an example of phased missions (namely, a first mission 200, and a second mission 201) of an air-domain scenario, starting with an aircraft 102a-c taking off 202, performing climbing 204 and cruising 206 manoeuvres before and after performing surveillance 208 and then descending 210 and landing 212. A maintenance operation 214 can take place after the landing phase 212, and before the take-off phase 216 of the second mission 201 commences.

In this embodiment, each mission segment of a mission may include one or more tasks that have to be performed or accomplished in order to successfully complete that mission segment.

For example, the take-off mission segments 212, 216 of the first and second missions 200, 201 may include a "thrust" task that require the engines of an aircraft 102a-c to produce sufficient thrust to achieve take-off. Also for example, the surveillance mission segment 208 may include a "navigate" task that requires that a navigation subsystem of an aircraft 102a-c maintain the aircraft 102a-c on a predetermined route proximate to an entity under surveillance, and an "image" task which requires imaging sensors on the aircraft 102a-c to capture images of the entity under surveillance. Also for example, the landing mission segment 212 may include a "landing gear" task that requires that a landing gear of the aircraft 102a-c be deployed, and a "break" task which requires the aircraft to break.

In this embodiment, each task includes one or more aircraft functions that need to be performed in order to successfully complete that task. Each function is performed by one or more LRIs of an aircraft 102a-c.

For example, the "navigate" task of the surveillance mission segment 208 may include a function of receiving and processing a Global Positioning System (GPS) signal. This function may be performed by the following LRIs located on-board an aircraft 102a-c: a signal receiving LRI, a filtering LRI, and a signal processing LRI. The function of receiving and processing a GPS signal may comprise the signal receiving LRI receiving GPS signals from a plurality of GPS satellites, filtering the received GPS signals by the filtering LRI, and processing the filtered GPS signals by the signal processing LRI to determine a location for the aircraft. For the function of receiving and processing a GPS signal to be performed, the signal receiving LRI, the filtering LRI, and the signal processing LRI need to be operational (i.e. not faulty).

In this embodiment, the memory 116 stores, for each of a plurality of missions, a respective mission model 120. In this embodiment, a mission model 120 for a mission is a digital model specifying each of the mission phases included in that mission. In this embodiment, a mission model 120 further specifies, for each of the mission phases specified by that mission model 120, each of the tasks involved in that missions phase. In this embodiment, a mission model 120 further specifies, for each of the tasks specified by that mission model 120, each of the functions that are required to be performed in order to accomplish that task. In this embodiment, a mission model 120 further specifies, for each of the functions specified by that mission model 120, and for each of the different types of aircraft 102a-c, an indication whether or not that function is (ordinarily, i.e. under normal operating conditions) performable by that type of aircraft. In this embodiment, a mission model 120 further specifies, for each of the functions specified by that mission model 120, and for each of the types of aircraft that may be used to perform that function, each of the LRIs of that type of aircraft that is required to be operating correctly in order to perform that function.

Figure 3 is a process flow-chart showing certain steps of an embodiment of aircraft management method.

It should be noted that certain of the process steps depicted in the flowchart of Figure 3 and described below may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

At step s2, the aircraft data retrieval modules 104a-c are connected to respective aircraft 102a-c via respective wired communication links 108a-c.

At step s4, the aircraft data retrieval modules 104a-c download respective sets of aircraft fault data from the respective aircraft 102a-c. In particular, in this embodiment, each aircraft data retrieval modules 104a-c retrieves, from the aircraft 102a-c to which it is connected, a set of FICs.

At step s6, the aircraft data retrieval modules 104a-c relay the downloaded sets of FICs, via respective communication links 1110a-c, to the aircraft management module 106.

At step s8, the processor 112 receives and filters each set of FICs.

Each set of FICs may be filtered to remove those FICs that are not pertinent or are spurious. In this embodiments, the processor 112 filters each received set of FICs to remove all FICs that are not associated with at least one LRI specified in at least one of the mission models 120 stored in the memory 116.

Thus, in this embodiment, for each of the aircraft 102a-c, the set of FICs downloaded from that aircraft 102a-c is filtered such that it contains only those FICs that are specified in the mission model 120, and does not contain any FICs not specified in at least one of the mission models 120.

At step s10, for each mission model 120 stored in the memory 116, and for each of the aircraft 102a-c, the processor 112 determines which of the functions specified by that mission model 120 are capable of being performed by that aircraft 102a-c. In this embodiment, the processor 112 also determines which of the functions are not capable of being performed by which aircraft 102a-c.

In this embodiment, a function specified by a mission model 120 is determined to be capable of being performed by an aircraft 102a-c if:
- the mission model 120 that specifies that function indicates that that function is ordinarily performable by that type of aircraft; and
- the filtered set of FICs for that aircraft 102a-c do not indicate that a fault has occurred with any of the LRIs that are specified in that mission model 120 as being required to be operating correctly in order to perform that function.

In some embodiments, the determination by the processor 112 whether or not a function is performable by a specific aircraft 102a-c includes the processor accessing and processing a specification of at least part of that aircraft 102a-c. The aircraft specifications may include those stored in the memory 116 and may include, for example, an IETM, a circuit diagram, etc.

As an example, for the function of receiving and processing a GPS signal, the processor 112 determines that the first aircraft 102a is capable of performing that function if:
- the processor 12 determines that the first aircraft 102a is of a type that is ordinarily capable of receiving and processing a GPS signal; and
- the processor 112 determines that the first set of LRIs downloaded from the first aircraft 102a does not contain an LRI associated with the signal receiving LRI, the filtering LRI, or the signal processing LRI.

Thus, as no faults are indicated with any of the signal receiving LRI, the filtering LRI, and the signal processing LRI, and it has been established that the first aircraft 102a is ordinarily available for performing the function of receiving and processing a GPS signal, the processor 112 determines that the function of receiving and processing a GPS signal is performable by the first aircraft 102a.

At step s12, using an output of step s10, for each mission model 120 stored in the memory 116, and for each of the aircraft 102a-c, the processor 112 determines which of the tasks specified by that mission model 120 are capable of being performed by that aircraft 102a-c. In this embodiment, the processor 112 also determines which of the tasks are not capable of being performed by which aircraft 102a-c.

In this embodiment, a task is determined to be capable of being performed by an aircraft 102a-c if, at step s10, it is determined that all of the functions of that task are capable of being performed by that aircraft 102a-c.

For example, the processor 112 may determine that the "navigate" task is performable by the first aircraft 102a if, at steps s10, it is determined that the function of receiving and processing a GPS signal, and each of the other functions of the navigate task, are performable by the first aircraft 102a.

At step s14, using an output of step s12, for each mission model 120 stored in the memory 116, and for each of the aircraft 102a-c, the processor 112 determines which of the mission segments specified by that mission model 120 are capable of being performed by that aircraft 102a-c. In this embodiment, the processor 112 also determines which of the mission segments are not capable of being performed by which aircraft 102a-c.

In this embodiment, a mission segment is determined to be capable of being performed by an aircraft 102a-c if, at step s12, it is determined that all of the tasks of that mission segment are capable of being performed by that aircraft 102a-c.

For example, the processor 112 may determine that the surveillance mission segment 208 is performable by the first aircraft 102a if, at step s12, it is determined that the "navigate" task and the "image" task are both performable by the first aircraft 102a.

At step s16, using an output of step s14, for each mission model 120 stored in the memory 116, and for each of the aircraft 102a-c, the processor 112 determines whether or not the mission specified by that mission model 120 is capable of being performed by that aircraft 102a-c. In this embodiment, the processor 112 also determines which of the missions are not capable of being performed by which aircraft 102a-c.

In this embodiment, a mission is determined to be capable of being performed by an aircraft 102a-c if, at step s14, it is determined that all of the mission segments of that mission are capable of being performed by that aircraft 102a-c.

For example, the processor 112 may determine that the first mission 200 is performable by the first aircraft 102a if, at step s14, it is determined that the taking off 202, climbing 204, cruising 206, surveillance 208, descending 210, and landing 212 mission segments are all performable by the first aircraft 102a.

At step s18, the display 118 displays the output from the processor 112 after performing step s18.

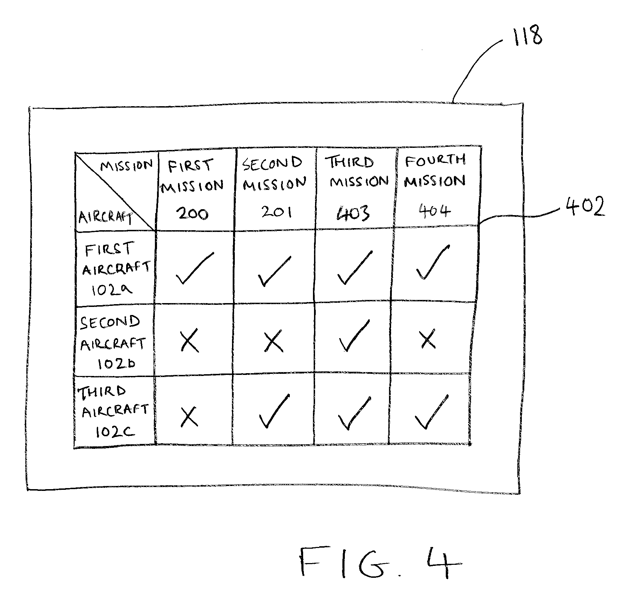

Figure 4 is a schematic illustration (not to scale) showing an example display by the display 118 in which the output of the processor 112 is displayed as a table 402.

In this embodiment, each aircraft 102a-c is represented by a respective row of the table 402. Also, each of the missions that are to be undertaken by the aircraft 102a-c are represented by a respective column of the table 402. Each intersection of a row and a column (i.e. each cell of the table 402, i.e. each aircraft-mission pair) contains an indication of whether the aircraft represented by that row is capable of performing the mission represented by that column. A "tick" indicates that an aircraft is capable of performing a mission, while a "cross" indicates that an aircraft is not capable of performing a mission. Thus, in this example, the table 402 specifies that the first mission 200 is capable of being performed by only the first aircraft 102a, the second mission 201 is capable of being performed by only either the first or third aircraft 102a, 102c, the third mission 403 is capable of being performed by any of the aircraft 102a-c, and the fourth mission 404 is capable of being performed by only either the first or third aircraft 102a, 102c.

In some embodiments, the user may select a cell of the table 402 that contains a "cross", and a breakdown of the error list that resulted in that "cross" may be displayed to the user.

Advantageously, the information displayed by the display 118 at step s18 facilitates a user (e.g. ground crew personnel, or a fleet manager) to manage the fleet of aircraft 102a-c.

Thus, an aircraft management method is performed.

In the above embodiments, the output of the processor 112 that is displayed to the user contains only binary indications (ticks or crosses) for whether or not an aircraft is capable of performing a mission. However, in other embodiments, different indication may be used.

In some embodiments, for each aircraft-mission pair, a score (e.g. a value between 0 and 100) may be provided. Such a score may be a value of any appropriate metric and may, for example, be representative of how appropriate the selection of an aircraft for performing a particular mission is, or a likelihood of an aircraft successfully performing a particular mission. These score values may be used to compare different aircraft mission-pairs and may, for example, be used to guide the selection of an aircraft for performing a particular mission.

In some embodiments, the determination of a score value for an aircraft-mission pair may include, for each LRI specified in the mission model 120 of that mission, assigning a score indicative of the "importance" of that LRI. Thus, the LRIs in a mission model 120 may be weighted according to their significance. For example, critical components may be weighted relatively highly, while optional components may be weighted relatively lowly. Using the FICs downloaded from an aircraft, the processor 112 may use the importance scores of the LRIs indicated as faulty to determine a score value indicative of how capable that aircraft is of performing a function. These function score values may, in turn, be used to compute a score value indicative of how capable that aircraft is of performing a task. These task score values may, in turn, be used to compute a score value indicative of how capable that aircraft is of performing a mission segment. These mission segment score values may, in turn, be used to compute a score value indicative of how capable that aircraft is of performing a mission.

In some embodiments, the determination of a score value for an aircraft-mission pair may include, to each FIC downloaded from an aircraft 102a-c, assigning a score indicative of the "severity" of the fault or failure indicate by that FIC. For example, such a "severity score" may indicate how critical fault is to the operation of an aircraft. Thus, the FICs downloaded from an aircraft 102a-c may be weighted according to their severity. For example, FICs that are indicative of critical faults may be weighted relatively very highly, FICs indicative of noncritical faults may be weighted at a medium level, and FICs indicative of redundant faults (i.e. faults that have occurred but for which one or more backup systems or devices are available) may be weighted relatively lowly. The processor 112 may use the severity scores of the FICs downloaded from an aircraft 102a-c to determine a score value indicative of how capable that aircraft 102a-c is of performing a function. These function score values may, in turn, be used to compute a score value indicative of how capable that aircraft is of performing a task. These task score values may, in turn, be used to compute a score value indicative of how capable that aircraft is of performing a mission segment. These mission segment score values may, in turn, be used to compute a score value indicative of how capable that aircraft is of performing a mission.

In the above embodiments, the information displayed by the display 118 at step s18 is used to guide a user in the management of the aircraft fleet. In some embodiments, one or more additional optional processes may be performed.

For example, in some embodiments, the processor 112 may determine which aircraft 102a-c in the fleet is most appropriate for performing a particular mission. The processor 112 may then provide a recommendation to the user, e.g. on the display 118. For example, in embodiments, in which the aircraft-mission pairs are scored, the processor 112 may recommend, for a particular mission, the highest/lowest scoring aircraft 102a-c for that mission.

In some embodiments, the processor 112 may determine a mission schedule for the fleet of aircraft 102a-c. The determination of such a mission schedule may include optimising the performance of one or more of the missions given the capabilities of the aircraft 102a-c in the fleet. The processor 112 may provide the determined mission schedule to the user, e.g. on the display 118. The processor 112 may use score values (e.g. of the aircraft-mission pairs) to determine the mission schedule. The processor 112 may use any appropriate additional information to determine the mission schedule. Such additional information may be input to processor 112 by the user using the user input device 114. Examples of appropriate additional information that may be used in the determination of a mission schedule include, but are not limited to, timing information that may indicate a time during which a mission needs to be completed, or a "mission importance measure" indicative of how important a mission is. The processor 112 may assign the most healthy (i.e. least faults) aircraft to the most important missions.

Using the example display shown in Figure 4, an example mission schedule may specify that the third mission 403 should be performed by the second aircraft 102b (since it is the only mission that that aircraft 102b is capable of performing), the first mission 200 should be performed by the first aircraft 102b (since that that aircraft 102a is the only aircraft in the fleet capable of performing that mission 200), and the second mission 201 should be performed by the third aircraft 102c (if, for example, the second mission 201 is deemed to be more important than the fourth mission 404). The mission schedule may further specify that the fourth mission 404 should be performed by the first to return of the first aircraft 102a and the third aircraft 102c. The mission schedule may further specify that the second aircraft 102b should undergo maintenance upon returning from the third mission 403.

In some embodiments, the processor 112 may determine a maintenance schedule for the fleet of aircraft 102a-c. The determination of such a maintenance schedule may include optimising, given the capabilities of the aircraft 102a-c in the fleet, the performance of maintenance process and/or the performance of one or more of the missions. The processor 112 may provide the determined maintenance schedule to the user, e.g. on the display 118. The processor 112 may use score values (e.g. of the aircraft-mission pairs) to determine the maintenance schedule. The processor 112 may use any appropriate additional information to determine the maintenance schedule. Such additional information may be input to processor 112 by the user using the user input device 114. Examples of appropriate additional information that may be used in the determination of a maintenance schedule include, but are not limited to, timing information that may indicate a time during which a mission needs to be completed, a "mission importance measure" indicative of how important a mission is, an availability of maintenance facilities, the availability of replacement LRIs, and estimated maintenance durations. The processor 112 may delay maintenance of an aircraft, e.g. of repair non-critical faults, so as to improve mission readiness.

Using the example display shown in Figure 4, an example maintenance schedule may specify that, although the second aircraft 102b requires maintenance (as it has faults that prevent it from performing the first, second and fourth missions 200, 201, 404), maintenance of the second aircraft 102b should be delayed until after it has completed the third mission 403. The maintenance schedule may also specify that the third aircraft 102c should undergo immediate maintenance, for example, because the maintenance facility and required LRIs are available, the expected duration of the repair operations is short, and because the first aircraft 102a is available to perform any of missions as needed.

In some embodiments, the processor 112 may receive, via the user input device 114, a user specification of a mission that they desire undertaken. Such a mission specification may comprise mission segments, tasks, and/or functions taken from one or more of the mission models 120 stored in the memory 116. Also, such a mission specification may indicate new mission segments, tasks, and/or functions, and may specify the LRIs needed to perform those new mission segments, tasks, and/or functions. The processor 112 may provide an aircraft recommendation, mission schedule, and/or maintenance schedule based on the newly received mission specification.

In some embodiments, the processor 112 may construct a function, task, mission segment, and/or mission that is performable by an aircraft based on the FIC data downloaded from that aircraft. For example, the processor 112 may use FIC data downloaded from an aircraft to identify the fully functional LRIs on-board that aircraft, and may determine one or more missions that are performable by that aircraft. Such determined missions may be displayed on the display 118 to the user, who may choose to send that aircraft on one or more of the new missions proposed by the processor 112.

In some embodiments, the user may input to the processor 112, via the user input device 114, a performance score of the processor 112. Such a performance score may be representative of the quality of the output or advice produced by the processor 112. For example, where the processor 112 has recommended a certain aircraft-mission pair, a performance score may be representative of how well that aircraft performed that mission. The processor 112 may perform a machining learning process based on the received performance scores, so as to improve its output quality.

In some embodiments, the processor 112 may determine a "damage assessment" of an aircraft 102a-c. For example, the processor 112 may compare a set of FICs acquired from an aircraft 102a-c prior to it embarking on a mission with a set of FICs acquired from that aircraft 102a-c once it has returned from that a mission. The processor 112 may determine damage that has occurred to that aircraft 102a-c based on the performed comparison. In some embodiments, the processor 112 may recommend particular maintenance operations depending on the determined damage assessment. In some embodiments, the processor may use one or more determined damage assessments to estimate a future state of an aircraft if it were to undertake a particular set of missions. In some embodiments, the determined damage assessments of aircraft and/or estimated future states of aircraft may be used in the determination of a mission schedule and/or a maintenance schedule. For example, using the example shown in Figure 4, the processor 112 may determine that, based on previous damage assessments, aircraft that undertake the first mission 200 typically sustain damage that prevents them from undertaking the second mission 201. Thus, in a mission schedule in which the first mission 200 is assigned to the first aircraft 102a, the processor 112 assigns the second mission 201 to a different aircraft, for example, the third aircraft 102c.

In some embodiments, the processor 112 determines and outputs analytics or trends for the aircraft fleet. For example, the processor 112 may identify recurring faults, which may, for example, indicate substandard LRIs or a deficiency in an aircraft design.

In some embodiments, the processor 112 determines and outputs a supply chain schedule which may be based on a determined maintenance schedule. For example, the processor 112 may predict which aircraft LRIs will be replaced during maintenance operations, and may also automatically place supply orders for replacements.

Further information may also be displayed on the display 118 to the user. For example, the processor 112 may determine and display suggestions or recommendations to the user that one or more actions be performed (e.g. investigating a particular part of an aircraft 102a-c or repairing or replacing a part of an aircraft 102a-c). Information (in the form of text, audio, video, images, etc.) may be presented to the user to aid the user in the investigation and/or repair of the one or more faults. For example, one or more pages of a relevant IETM may be displayed to the user. Also, for example, instructions on how to investigate and/or repair the one or more diagnosed faults may be displayed to the user on the display 118.

The above described system and method advantageously tends to provide for quick, efficient, and consistent fleet planning, logistic support, mission scheduling, and maintenance scheduling. Advantageously, the establishing of an efficient supply chain (e.g. for replacement LRIs), and an efficient work shop (for performing maintenance) are facilitated.

Advantageously, the above described system and method tends to reduce the instances of performing of needless, or non-value adding, maintenance. Conventionally, aircraft are maintained at the highest level possible. In contrast, the above described system and methods recognise that not all aircraft functions are required to perform certain missions and thus, certain aircraft faults can effectively be ignored for missions that they have little or no adverse effect on. Thus, a fleet's ability to perform a set of missions tends to be improved. Furthermore, the maintenance burden of aircraft maintenance crew tends to be reduced, for example, by reducing, eliminating, or delaying unnecessary maintenance.

Typically, fleet management is performed by experienced ground crew based upon their knowledge and experience. The above described method and apparatus advantageously tends to reduce relying on such individuals and thus provide a robustness to the loss of experienced personnel. Advantageously, the above described system may benefit from the knowledge of experienced ground crew using machine learning algorithms and the like.

The above described system and method tend to improve aircraft safety and availability.

The above described system and method advantageously tend to mean that fewer pieces of equipment may be required to perform aircraft maintenance. This tends to reduce costs associated with certifying equipment for use with aircraft. Furthermore, storage and transport costs etc. associated with such equipment tend to be reduced.

The above described system and method advantageously tend to alleviate the problem of unnecessary maintenance, repairs, or equipment removals being performed.

The above described system and method advantageously tend to reduced the level of skill that required by a person to perform maintenance. This advantageously tends to reduce personnel training costs

The above described system and method advantageously tend to improve diagnostic accuracy.

The above described system and method advantageously tend to provide a learning diagnostics capability.

The above described system and method advantageously tend to reduce maintenance time and cost.

Advantageously, the above described system and method may be used to produce an optimised mission schedule. Advantageously, the above described system and method may be used to produce an optimised maintenance schedule. Advantageously, a mission schedule and maintenance schedule may be jointly considered such that schedules optimised in both the mission and maintenance problem spaces may be produced.

Advantageously, turnaround times for the aircraft tend to be reduced.

Advantageously, the above described system and method, in contrast to conventional methods and systems, tend to be robust to increases in the number of aircraft in the fleet, the introduction of more complex or unpredictable missions, the introduction of more complicated maintenance constraints, and increases in the "uptime" for an aircraft.

Advantageously, the above described system and method tend to overcome the deficiencies of fixed maintenance schedule.

In the above embodiments, the management of a fleet of three aircraft is performed. However, in other embodiments, the fleet comprises a different number of vehicles, for example, more than ten. Also, in other embodiments, the fleet may comprise one or more different types of vehicle instead of or in addition to one or more of the aircraft. For example, in some embodiments, one or more vehicles of the fleet may be a land-based or water-based vehicle.

In the above embodiments, fault data (i.e. FICs) are downloaded from the aircraft by connecting each aircraft to a respective aircraft data retrieval module via a respective wired communication link. However, in other embodiments, fault data is downloaded from one or more of the aircraft in a different appropriate way. For example, in some embodiments, fault data from more than one aircraft are downloaded onto a common data retrieval device. Also, in some embodiments, fault data from one or more aircraft is downloaded wirelessly. Aircraft data downloaded by the plurality of aircraft data retrieval modules may be uploaded to the aircraft management module in any appropriate way, for example, via respective wired communication links.

In the above embodiments, fault data retrieval and aircraft management are performed by separate devices. However, in other embodiments, the aircraft management module is configured to retrieve aircraft fault data from one or more of the aircraft, for example, via a wired communication link.

In the above embodiments, fault data is retrieved from the aircraft after the aircraft have completed a sortie, e.g. after an aircraft has landed. However, in other embodiments, fault data may be retrieved from one or more of the aircraft while that aircraft is in flight. In some embodiments, one or more of the aircraft data retrieval modules may each be located on a respective aircraft. Also, in some embodiments, the aircraft management module may be located on an aircraft, or distributed across a plurality of the aircraft. Also, in some embodiments, a schedule determined by the aircraft management module may be determined and/or implemented while one or more of the aircraft are in-flight.

## Claims

1. A method of determining a capability of a vehicle (102a), the method comprising:
acquiring, by one or more processors (112), from the vehicle (102a), fault data that indicates the presence or absence of a fault on the vehicle (102a);
acquiring, by the one or more processors (112), a mission model specifying a mission (200) to be performed; and
processing, by the one or more processors (112), the fault data to determine an indication indicative of a capability of the vehicle (102a) to perform the mission (200) specified by the mission model.

2. A method according to claim 1, the method further comprising:
acquiring, by the one or more processors (112), from each of one or more further vehicles (102b, 102c), fault data that indicates the presence or absence of a fault on that further vehicle (102b, 102c);
acquiring, by the one or more processors (112), one or more further mission models, each further mission model specifying a further mission (201, 403, 404) to be performed, each further mission (201, 403, 404) being different to the mission (200) specified by the mission model; and,
for the vehicle (102a) and each of the further vehicles (102b, 102c), and for the mission model and each of the further mission models, processing, by the one or more processors (112), the fault data acquired from that vehicle (102a) or further vehicle (102b, 102c) to determine an indication indicative of a capability of that vehicle (102a) or further vehicle (102b, 102c) to perform the mission (200) or further mission (201, 403, 404) specified by that mission model or further mission model.

3. A method according to claim 1 or 2, wherein the mission model specifies:
one or more mission segments (202-216) that are required to be completed in order to accomplish the mission (200); and,
for each mission segment (202-216), one or more tasks or procedures that are required to be performed by the vehicle (102a) in order to accomplish that mission segment (202-216).

4. A method according to claim 3, wherein the mission model further specifies, for each of the specified tasks or procedures, at least one component or system of components, the at least one component or system of components being on-board the vehicle (102a), and the at least one component or system of components being implemented during the vehicle (102a) performing that specified task or procedure.

5. A method according to any of claims 1 to 4, wherein the fault data acquired from the vehicle (102a) comprises one or more Fault Indication Codes that are activated in response to the presence of respective faults in the vehicle (102a).

6. A method according to claim 5 when dependent on claim 4, wherein each Fault Indication Code is associated with a respective component or system of components, and each Fault Indication Code indicates a fault with the component or system of components with which it is associated.

7. A method according to any of claims 3 to 6 when dependent on claim 2, wherein each indication is a score indicative of a relative capability of a vehicle (102a) to perform a mission.

8. A method according to claim 7, wherein:
the method further comprises, for the vehicle (102a) and each of the further vehicles (102b, 102c), using the fault data acquired from that vehicle (102a) or further vehicle (102b, 102c), assigning, to each fault present on that vehicle (102a) or further vehicle (102b, 102c), a weight based on a severity of that fault; and,
for the vehicle (102a) and each of the further vehicles (102b, 102c), the score determined for that vehicle (102a) or further vehicle (102b, 102c) is a function of the weights assigned to the faults present on that vehicle (102a) or further vehicle (102b, 102c).

9. A method according to claim 7 or 8 when dependent on claim 4, wherein:
the method further comprises, assigning, to each of the components or systems of components specified in the mission model, a weight; and,
for the vehicle (102a) and each of the further vehicle (102b, 102c), the score indicative of a relative capability of that vehicle (102a) or further vehicle (102b, 102c) to perform the mission (200) specified by the mission model is a function of the weights assigned to each of the components or systems of components.

10. A method according to any of claims 3 to 9 when dependent on claim 2, the method further comprising determining, by the one or more processors (112), using the determined indications, an optimised mission schedule for the vehicle (102a) and further vehicles (102b, 102c) to perform the mission (200) and further missions (201, 403, 404).

11. A method according to any of claims 3 to 10 when dependent on claim 2, the method further comprising determining, by the one or more processors (112), using the determined indications, an optimised maintenance schedule for performing maintenance on the vehicle (102a) and the further vehicle (102a)s.

12. A method according to any of claims 1 to 11, wherein each vehicle (102a) is an aircraft.

13. Apparatus for determining a capability of a vehicle (102a), the apparatus comprising one or more processors (112) configured to:
acquire, from the vehicle (102a), fault data that indicates the presence or absence of a fault on the vehicle (102a);
acquire a mission model specifying a mission (200) to be performed; and
process the fault data to determine an indication indicative of a capability of the vehicle (102a) to perform the mission (200) specified by the mission model.

14. A program or plurality of programs arranged such that when executed by a computer system or one or more processors (112) it/they cause the computer system or the one or more processors (112) to operate in accordance with the method of any of claims 1 to 12.

15. A machine readable storage medium storing the program or the plurality of programs according to claim 14.
